# EUROPÄISCHE PATENTSCHRIFT

(11) **EP 3 810 353 B1**
(45) Veröffentlichungstag und Bekanntmachung des Hinweises auf die Patenterteilung: **27.09.2023**
(21) Anmeldenummer: 19729435.8
(22) Anmeldetag: 09.05.2019
(51) Int. Cl.: B21H 7/18, B23P 9/02, B24B 39/00

(54) **WALZKÖRPER FÜR EIN HYDROSTATISCHES WALZWERKZEUG UND HYDROSTATISCHES WALZWERKZEUG MIT DEM WALZKÖRPER**
ROLLER BODY FOR A HYDROSTATIC ROLLING TOOL, AND HYDROSTATIC ROLLING TOOL HAVING SAID ROLLER BODY
ÉLÉMENT DE LAMINAGE POUR UN OUTIL DE LAMINAGE HYDROSTATIQUE ET OUTIL DE LAMINAGE HYDROSTATIQUE MUNI DUDIT ÉLÉMENT DE LAMINAGE

(30) Priorität: 19.06.2018 DE 102018114689
(43) Veröffentlichungstag der Anmeldung: 28.04.2021
(73) Patentinhaber: Schaeffler Technologies AG & Co. KG, 91074 Herzogenaurach (DE)
(72) Erfinder: GESCHWINDNER, Peter, 91052 Erlangen (DE)
(86) Internationale Anmeldenummer: PCT/DE2019/100418
(87) Internationale Veröffentlichungsnummer: WO 2019/242791

(56) Entgegenhaltungen:
- EP-A1- 3 254 773
- EP-A2- 2 666 590
- DE-A1- 10 340 267

## Beschreibung

Die Erfindung betrifft einen Walzkörper für ein hydrostatisches Walzwerkzeug mit den Merkmalen des Oberbegriffs des Anspruchs 1 und ein hydrostatisches Walzwerkzeug mit dem Walzkörper mit den Merkmalen des Anspruchs 8.

Es ist bekannt, hydrostatische Walzwerkzeuge mit einer Walzrolle oder einer Walzkugel zur walzenden Bearbeitung und zum Einbringen von Konturen oder Bohrungen in ein Werkstück zu verwenden.

Beispielsweise beschreibt die Druckschrift DE 88 09 823 ein Walzwerkzeug mit einer Walzrolle, die hydrostatisch in einem Rollenkopf des Walzwerkzeugs gelagert ist. In der Druckschrift DE 103 40 267 A1, welche die Basis für den Oberbegriff des Anspruchs 1 bildet, sind ein hydrostatisches Walzwerkzeug und eine Walzrolle zum Walzen eines Werkstücks beschrieben. Die Walzrolle weist einen Arbeitsumfang auf, der in einem räumlich von einem Lagerkontaktbereich getrennten Werkstückkontaktbereich der Walzrolle liegt.

Die EP 3 254 773 A1 beschreibt ein Verfahren und eine Vorrichtung zur strukturellen Konditionierung einer Walze in einem Festwalzprozess mittels eines Druckwerkzeugs. Das Druckwerkzeug weist mindestens ein Druckelement umfassend eine drehbare Kugel oder eine drehbare zylindrische Rolle auf.

Die EP 2 666 590 A2 offenbart ein Verfahren zum Rollieren einer zylindrischen Bauteiloberfläche unter Verwendung eines wenigstens ein Wälzelement aufweisenden Rollierwerkzeugs.

Der Erfindung liegt die Aufgabe zugrunde, ein hydrostatisches Walzwerkzeug mit einem funktional verbesserten Walzkörper bereitzustellen. Diese Aufgabe wird durch einen Walzkörper mit den Merkmalen des Anspruchs 1 und durch ein hydrostatisches Walzwerkzeug mit den Merkmalen des Anspruchs 8 gelöst. Bevorzugte oder vorteilhafte Ausführungsformen der Erfindung ergeben sich aus den Unteransprüchen der nachfolgenden Beschreibung und/oder den beigefügten Figuren.

Es wird ein Walzkörper für ein hydrostatisches Walzwerkzeug vorgeschlagen. Der Walzkörper ist an dem Walzwerkzeug zur walzenden Bearbeitung, insbesondere zur Weich- und/oder Hartbearbeitung, eines Werkstücks angeordnet.

Vorzugsweise umfasst das Walzwerkzeug einen Werkzeugkopf mit einer Aufnahme für den Walzkörper. Insbesondere ist der Walzkörper zumindest teilweise in der Aufnahme aufgenommen. Bevorzugt ist eine unter Druck stehende Flüssigkeit in die Aufnahme einleitbar, mittels der der Walzkörper mit Kraft beaufschlagbar ist.

Vorzugsweise weist der Walzkörper eine kugelähnliche Gestalt auf. Er ist insbesondere als eine Konturkugel ausgebildet. Der Walzkörper ist um eine Rotationsachse rotierbar, wobei die Rotationsachse durch ein Zentrum des Walzkörpers verläuft. Der Walzkörper weist eine sich senkrecht zu der Rotationsachse erstreckende Mittelachse auf. Die Mittelachse verläuft durch das Zentrum des Walzkörpers.

Der Walzkörper ist dazu ausgebildet, das Werkstück walzend zu bearbeiten. Zu Bearbeitung des Werkstücks umfasst der Walzkörper einen Bearbeitungsbereich. Beispielsweise beträgt eine Größe des Walzkörpers, insbesondere ein sich entlang der Mittellinie erstreckender Quasi-Durchmesser des Bearbeitungsbereichs, maximal bis zu 20 Millimeter, vorzugsweise maximal bis zu 10 Millimeter, insbesondere maximal bis zu 2 Millimeter.

Der Bearbeitungsbereich weist eine im Querschnitt des Walzkörpers gebildete Bearbeitungsprofillinie auf. Die Bearbeitungsprofillinie umfasst einen ersten Bearbeitungskreisbogen und einen zweiten Bearbeitungskreisbogen. Der erste Bearbeitungskreisbogen erstreckt sich um einen ersten Bearbeitungsmittelpunkt und der zweite Bearbeitungskreisbogen erstreckt sich um einen zweiten Bearbeitungsmittelpunkt.

Erfindungsgemäß sind die beiden Bearbeitungsmittelpunkte zueinander und zu dem Zentrum des Walzkörpers versetzt angeordnet sind. Vorzugsweise sind die beiden Bearbeitungsmittelpunkte auch gegenüber Mittelachse und/oder gegenüber der Rotationsachse versetzt angeordnet.

In einer bevorzugten Ausführungsform liegen die beiden Bearbeitungsmittelpunkte in dem Querschnitt des Walzkörpers auf einer Geraden, die parallel zu der Rotationsachse verläuft. Vorzugsweise verlaufen die beiden Bearbeitungskreisbögen zueinander symmetrisch, wobei die Mittelachse eine Symmetrieachse für die beiden Bearbeitungskreisbögen bildet.

Vorzugsweise schneiden sich der erste Bearbeitungskreisbogen und der zweite Bearbeitungskreisbogen in dem Querschnitt des Walzkörpers in einem Schnittpunkt. Insbesondere bilden sie in dem Schnittpunkt eine Spitze aus. Optional bilden die Spitze, ein an die Spitze angrenzender Abschnitt des ersten Bearbeitungskreisbogens und ein an die Spitze angrenzender Abschnitt des zweiten Bearbeitungskreisbogens einen Freibereich, der den Bearbeitungsbereich unterbricht und/oder unterteilt. Insbesondere kontaktieren nur die anderen Abschnitte des ersten und zweiten Bearbeitungskreisbogens im Betrieb des Walzwerkzeugs das Werkstück zur walzenden Bearbeitung, wogegen die Spitze und die an diese angrenzenden Abschnitte der Bearbeitungskreisbögen kontaktfrei zum Werkstück angeordnet sind.

Möglich ist im Rahmen der Erfindung, dass die Spitze abgetragen und/oder abgeflacht ist. Beispielsweise umfasst die Bearbeitungsprofillinie im Querschnitt des Walzkörpers einen bevorzugt von der Rotationsachse beabstandeten Linienabschnitt, der insbesondere durch das Abtragen und/oder Abflachen der Spitze gebildet ist. Vorzugsweise ist der Linienabschnitt eine parallel zu der Rotationsachse verlaufende Strecke. Alternativ kann der Linienabschnitt aber auch gekrümmt und/oder gebogen sein. Besonders bevorzugt ist, dass der erste Bearbeitungskreisbogen in einem ersten Ende des Linienabschnitts mündet und dass der zweite Bearbeitungskreisbogen in einem zweiten Ende des Linienabschnitts mündet. Optional ist in einem Mündungsbereich des ersten Bearbeitungskreisbogens und des ersten Endes des Linienabschnitts ein Übergangsradius gebildet und in einem Mündungsbereich des zweiten Bearbeitungskreisbogens und des zweiten Endes des Linienabschnitts ein zweiter Übergangsradius gebildet. Vorzugsweise sind der erste Übergangsradius und der zweite Übergangsradius zueinander symmetrisch, wobei die Mittelachse eine Symmetrieachse für die beiden Übergangsradien bildet.

In einer möglichen Umsetzung der Erfindung bildet der Linienabschnitt einen oder den Freibereich, der den Bearbeitungsbereich unterbricht und/oder unterteilt. Insbesondere kontaktieren nur die Bearbeitungskreisbögen im Betrieb des Walzwerkzeugs das Werkstück zur walzenden Bearbeitung, wogegen der Linienabschnitt als Freibereich kontaktfrei angeordnet ist.

Vorteilhaft ist, dass durch den Walzkörper, der insbesondere den Freibereich aufweist, im Betrieb des Walzwerkzeugs Bohrungen, Radien, Innengewinde, Einstiche, Ellipsen und/oder Konturen mit mehreren versetzten Radien in das Werkstück eingebracht werden können. Vorzugsweise weisen die Bohrungen, die mittels des Walzkörpers im Betrieb des Walzwerkzeugs in das Werkstück eingebracht werden können, einen verhältnismäßig geringen Durchmesser von 10 Millimetern, insbesondere von 15 Millimetern und im Speziellen von 20 Millimetern auf. Jedoch ist der Walzkörper im Betrieb des Walzwerkzeugs auch für größer dimensionierte Anwendungen einsetzbar, insbesondere für größere Bauteile sowie für die entsprechende Wellenbearbeitung.

In einer bevorzugten Umsetzung der Erfindung weist der Walzkörper einen Haltebereich auf. Vorzugsweise ist der Walzkörper in dem Haltebereich an dem Walzwerkzeug gehalten. Insbesondere greift das Walzwerkzeug, insbesondere der Werkzeugkopf, in dem Haltebereich an, um den Walzkörper in der Aufnahme zu halten.

In einer möglichen konstruktiven Ausbildung der Erfindung weist der Haltebereich eine im Querschnitt des Walzkörpers gebildete erste Halteprofillinie und eine im Querschnitt des Walzkörpers gebildete zweite Halteprofillinie auf. Optional sind die erste Halteprofillinie und die zweite Halteprofillinie zueinander symmetrisch, wobei die Mittelachse eine oder die Symmetrieachse bildet. Vorzugsweise weist die erste Halteprofillinie einen ersten Haltekreisbogen auf oder sie ist als dieser ausgebildet. Insbesondere erstreckt sich der erste Haltekreisbogen um einen ersten Haltemittelpunkt, der auf der Rotationsachse liegt. Optional ergänzend weist die zweite Halteprofillinie einen zweiten Haltekreisbogen auf oder sie ist als dieser ausgebildet. Insbesondere erstreckt sich der zweite Haltekreisbogen um einen zweiten Haltemittelpunkt, der auf der Rotationsachse liegt.

Bevorzugt sind der erste Haltemittelpunkt und der zweite Haltemittelpunkt versetzt zueinander und optional ergänzend versetzt zu dem Zentrum des Walzkörpers angeordnet. Möglich ist im Rahmen der Erfindung, dass die beiden Haltemittelpunkte und/oder die beiden Haltekreisbögen zueinander symmetrisch sind, wobei die Mittelachse eine oder die Symmetrieachse bildet.

In einer möglichen alternativen Ausgestaltung umfasst jede der beiden Halteprofillinien zwei Haltekreisbögen, deren Haltemittelpunkte versetzt zueinander angeordnet sind. Insbesondere sind die Haltemittelpunkte der beiden Haltekreisbögen jeweils einer Halteprofillinie versetzt zu der Rotationsachse angeordnet. Alternativ kann jede der beiden Halteprofillinien zwei ovale Bögen oder Ellipsenbögen umfassen. Vorzugsweise sind die beiden ovalen Bögen oder Ellipsenbögen einer Halteprofillinie zueinander symmetrisch, wobei die Rotationsachse bevorzugt die Symmetrieachse bildet.

Insbesondere schneiden sich die beiden Haltekreisbögen oder ovalen Bögen bzw. Ellipsenbögen einer Halteprofillinie und bilden eine weitere Spitze aus. Im Speziellen weist die erste Halteprofillinie eine erste weitere Spitze auf und die zweite Halteprofillinie eine zweite weitere Spitze. Bevorzugt liegen die erste und zweite weitere Spitze auf der Rotationsachse und sind zueinander symmetrisch, wobei die Mittelachse eine oder die Symmetrieachse bildet. Insbesondere sind die beiden Haltekreisbögen einer Halteprofillinie zueinander symmetrisch, wobei die Rotationsachse hierfür eine oder die Symmetrieachse bildet.

In einer bevorzugten Ausführungsform der Erfindung mündet der erste Bearbeitungskreisbogen in der ersten Halteprofillinie und der zweite Bearbeitungskreisbogen mündet in der zweiten Halteprofillinie. Dadurch sind insbesondere in einem Mündungsbereich des ersten Bearbeitungskreisbogens in der ersten Halteprofillinie und in einem Mündungsbereich des zweiten Bearbeitungskreisbogens in der zweiten Halteprofillinie Übergangsradien gebildet.

Einen weiteren Gegenstand der Erfindung bildet ein hydrostatisches Walzwerkzeug mit dem Walzkörper nach einem der Ansprüche 1 bis 7. Der Walzkörper ist zur walzenden Bearbeitung des Werkstücks an dem Walzwerkzeug angeordnet.

Beispielsweise umfasst das Walzwerkzeug einen bevorzugt langgestreckten Grundkörper. Bevorzugt weist das Walzwerkzeug den Werkzeugkopf mit der Aufnahme auf. Insbesondere ist der Werkzeugkopf an dem Grundkörper angeordnet, im Speziellen in diesem integriert. Beispielsweise ist die Aufnahme eine Negativform für die Gestalt des Walzkörpers, wobei die Aufnahme insbesondere etwas voluminöser bemessen sein kann als der Walzkörper selbst oder wobei die Aufnahme im Wesentlichen der Gestalt des Walzkörpers als Negativform gleicht. Insbesondere ist der Walzkörper in der Aufnahme zumindest teilweise rotierbar aufgenommen. Optional ist der Walzkörper aus der Aufnahme entnehmbar und gegen einen anderen Walzkörper, z.B. zur Wartung oder zur Fertigung einer anderen Werkstückgeometrie, auswechselbar.

Beispielsweise weist das Walzwerkzeug einen Flüssigkeitskanal auf, der in der Aufnahme mündet und durch den die Flüssigkeit in die Aufnahme einleitbar ist. Optional ergänzend ist das Walzwerkzeug mit einer Flüssigkeits- und/oder Druckerzeugungsquelle verbindbar und/oder verbunden, die die Flüssigkeit bereitstellt und/oder mit Druck beaufschlagen kann.

Vorzugsweise ist die unter Druck stehende Flüssigkeit in die Aufnahme einleitbar und/oder eingeleitet, sodass der Walzkörper in der Aufnahme hydrostatisch gelagert ist und mittels der Flüssigkeit Kraft beaufschlagt ist. Insbesondere kann die Rotation des Walzkörpers um die Rotationsachse in der Aufnahme durch die unter Druck stehende Flüssigkeit bewirkt werden. Optional ist in dem Werkzeugkopf mindestens ein Entlastungskanal vorgesehen. Vorzugsweise erstreckt sich der Entlastungskanal von der Aufnahme zu einer Außenseite des Werkzeugkopfes, sodass die Flüssigkeit seitlich austreten kann, wenn der Walzkörper nicht im Kontakt mit dem Werkstück steht.

In einer möglichen Ausgestaltung der Erfindung umfasst der Werkzeugkopf zur Vorpositionierung des Walzkörpers in der Aufnahme, insbesondere in einem Querschnitt des Werkzeugkopfes, eine erste Zentriereinrichtung und eine zweite Zentriereinrichtungen. Vorzugsweise sind die Zentriereinrichtungen an dem Werkzeugkopf angeordnet und/oder ragen in die Aufnahme hinein. Bevorzugt liegen sich die beiden Zentriereinrichtungen in einem Querschnitt des Werkzeugkopfes in der Aufnahme auf gleicher Höhe gegenüber und sind aufeinander zu gerichtet.

Bevorzugt ist, dass die erste Zentriereinrichtung an der ersten Halteprofillinie des Haltebereichs des Walzkörpers angreift und die zweite Zentriereinrichtung an der zweiten Halteprofillinie des Haltebereichs angreift. Es ist besonders bevorzugt, dass die Angriffspunkte der beiden Zentriereinrichtungen auf der Rotationsachse angeordnet sind.

In einer möglichen konstruktiven Umsetzung der Erfindung umfasst das Walzwerkzeug mehrere Werkzeugköpfe, z.B. zwei oder drei Werkzeugköpfe. Vorzugsweise sind die Werkzeugköpfe an dem Grundkörper des Walzwerkzeugs angeordnet, insbesondere in diesem integriert. Besonders bevorzugt ist, dass die Werkzeugköpfe in einer Umfangsrichtung des Grundkörpers versetzt zueinander angeordnet sind. Insbesondere kann dadurch erreicht werden, dass sich Walzkräfte beziehungsweise Passivkräfte gegenseitig aufheben. Beispielsweise können zwei Werkzeugköpfe in Umfangsrichtung um 180 Grad zueinander versetzt angeordnet sein und drei Werkzeugköpfe z.B. um 120 Grad in Umfangsrichtung zueinander versetzt angeordnet sein. Optional ergänzend können die Werkzeugköpfe axial, insbesondere entlang einer Längserstreckung des Grundkörpers, versetzt zueinander angeordnet sein.

Bei einer weiteren möglichen Umsetzung der Erfindung kann der Werkzeugkopf zusätzlich durch die Druckbeaufschlagung mit der Flüssigkeit einen radialen Hub erzeugen, um Durchmesserunterschiede auszugleichen. Zudem kann der Werkzeugkopf in einer möglichen Ausführungsform der Erfindung starr oder frei rotierbar im Grundkörper aufgenommen sein.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: ein hydrostatische Walzwerkzeug mit einem Grundkörper und mit zwei Werkzeugköpfen, an denen jeweils ein Walzkörper angeordnet ist;
- Figur 2: das Walzwerkzeug aus Figur 1, wobei die Walzkörper an dem Grundkörper auf andere Weise angeordnet sind;
- Figur 3a: ein Walzkörper mit einem Bearbeitungsbereich in einer ersten Ausführungsform;
- Figur 3b: ein Bearbeitungsbereich des Walzkörpers in einer zweiten Ausführungsform;
- Figuren 4, 5: der Walzkörper aus Figur 3a mit unterschiedlich ausgebildeten Haltebereichen;
- Figur 6a: ein Werkzeugkopf des Walzwerkzeugs mit einer Aufnahme, in der der Walzkörper aus der Figur 4 aufgenommen ist;
- Figur 6b: ein Werkzeugkopf des Walzwerkzeugs mit einer Aufnahme, in der der Walzkörper aus der Figur 5 aufgenommen ist;
- Figur 7: ein abgewandelter Werkzeugkopf mit zweier Zentriereinrichtungen, die in die Aufnahme hineinragen.

Einander entsprechende oder gleiche Teile sind in den Figuren jeweils mit den gleichen Bezugszeichen versehen.

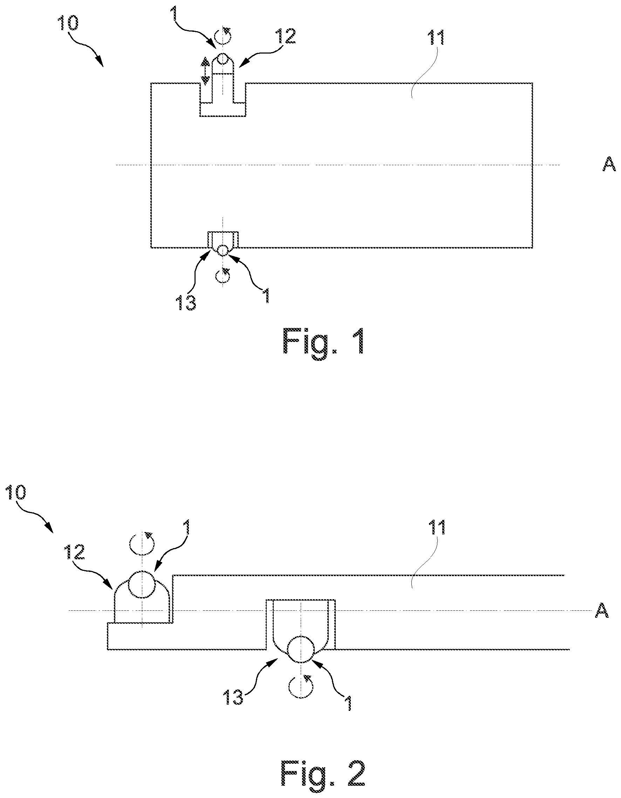

Figur 1 zeigt einen Längsschnitt durch ein hydrostatisches Walzwerkzeug 10. Das Walzwerkzeug 10 ist mit einer geeigneten Werkzeugmaschine, z.B. Drehmaschine, insbesondere CNC-Maschine, koppelbar und betreibbar. Das Walzwerkzeug 10 umfasst einen langgestreckten kreiszylinderförmigen Grundkörper 11 und zwei Werkzeugköpfe 12, 13. An jedem Werkzeugkopf 12, 13 ist ein Walzkörper 1 angeordnet. Der Walzkörper 1 ist im Betrieb des Walzwerkzeugs 10 dazu ausgebildet, ein nicht gezeigtes Werkstück walzend zu bearbeiten. Die walzende Bearbeitung umfasst eine Weich- oder Hartbearbeitung mit der unterschiedlichste Konturenformen, z.B. Bohrungen, Radien, Innengewinde, Einstiche, Ellipsen und/oder Konturen mit mehreren versetzten Radien in das Werkstück eingebracht werden können. Die mittels des Walzkörpers 1 einzubringenden Bohrungen können einen verhältnismäßig geringen Durchmesser von 10 Millimetern, insbesondere von 15 Millimetern und im Speziellen von 20 Millimetern aufweisen. Auch größere Bauteile, z.B. Wellen, können mit dem Walzwerkzeug bearbeitet werden.

Die beiden Werkzeugköpfe 12, 13 sind in einer Umfangsrichtung des Grundkörpers 11 zueinander um 180 Grad versetzt angeordnet. In einem anderen Ausführungsbeispiel gemäß der Figur 2 können die Werkzeugköpfe 12, 13 zusätzlich axial, insbesondere entlang einer Längsachse A des Grundkörpers 11, versetzt zueinander angeordnet sein. Alternativ kann das Walzwerkzeug 10 nur einen Werkzeugkopf 12 aufweisen oder mehr als zwei Werkzeugköpfe 12, 13.

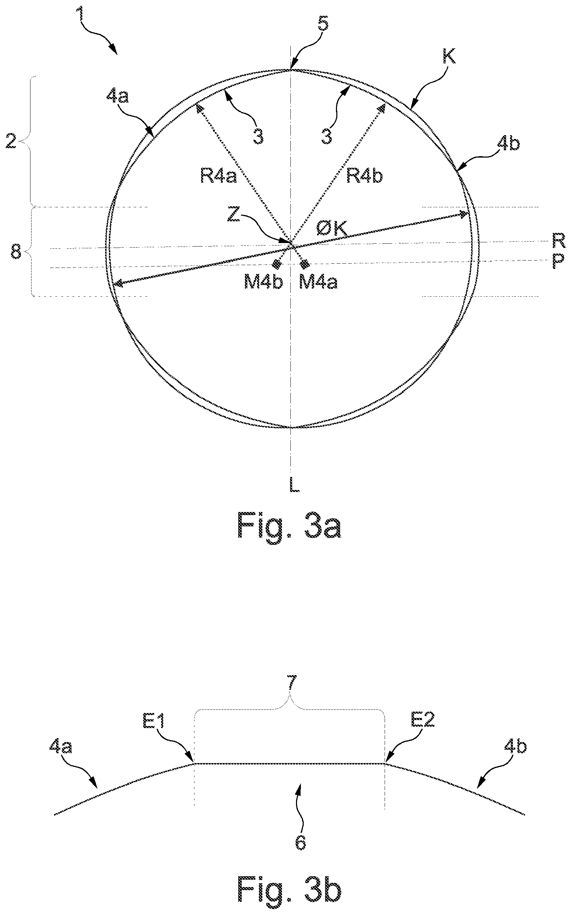

In der Figur 3a ist ein Querschnitt des Walzkörpers 1 gezeigt. Der Walzkörper 1 ist kugelähnlich, insbesondere als eine Profilkugel ausgebildet, deren Außenkontur von einer zum Vergleich gezeigten Kugel K abweicht, sich jedoch im Wesentlichen an der Außenkontur der Kugel K orientiert. Der Walzkörper 1 weist in Anlehnung an die Kugel K ein Zentrum Z und eine Mittelachse L auf. Er ist im Betrieb des Walzwerkzeugs 10 um eine Rotationsachse R rotierbar. Die Rotationsachse R verläuft durch das Zentrum Z und erstreckt sich rechtwinklig zu der Mittelachse L.

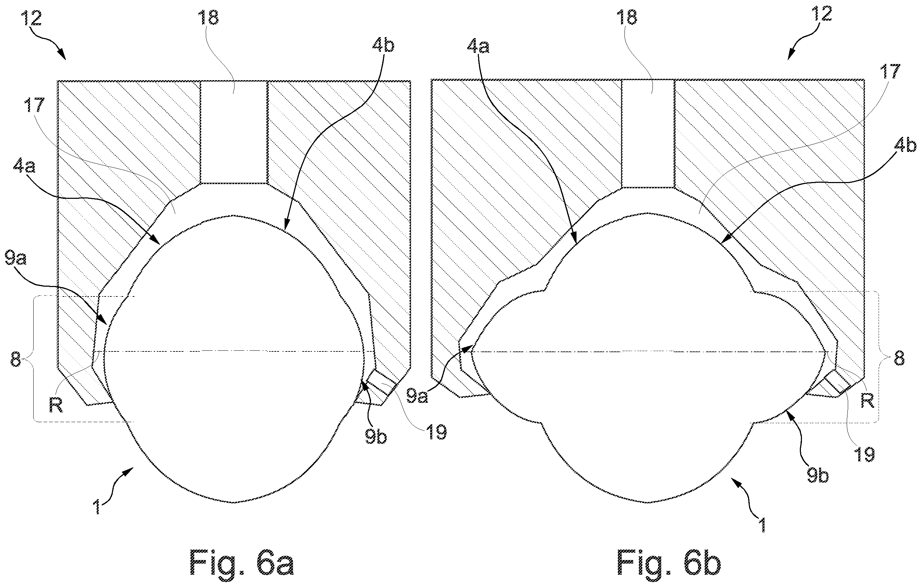

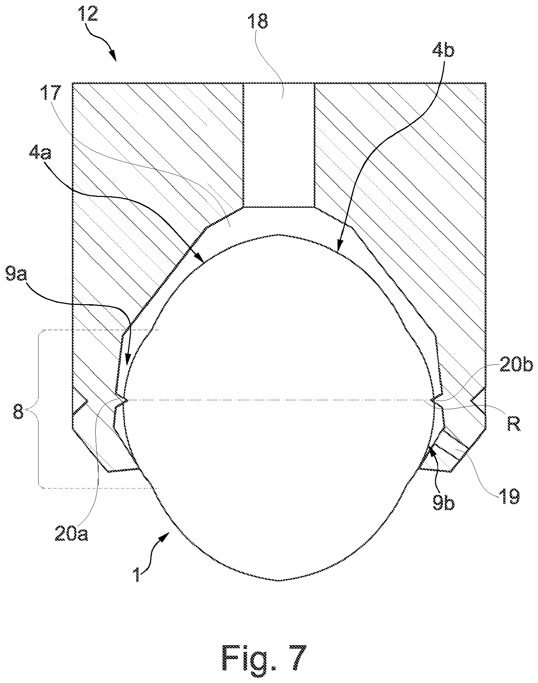

Der Walzkörper 1 weist einen Bearbeitungsbereich 2 und einen Haltebereich 8 auf. In dem Haltebereich 8 ist der Walzkörper 1, wie in den Figuren 6a, 6b und 7 gezeigt von dem Werkzeugkopf 11 gehalten. Der Bearbeitungsbereich 2 ist in der Figur 3a in einer ersten möglichen Ausführungsform und in der Figur 3b in einer zweiten möglichen Ausführungsform gezeigt. Der Bearbeitungsbereich 2 ist der Bereich, der das Werkstück kontaktiert und im Betrieb des Walzwerkzeugs 10 (Fig. 1, 2) walzend bearbeitet. Mittels des Bearbeitungsbereichs 2 wird die gewünschte Kontur in das Werkstück eingearbeitet.

Ein maximaler Durchmesser D des Walzkörpers 1 im Bearbeitungsbereich, der insbesondere entlang der Mittellinie L gemessen ist, beträgt 20 Millimeter, vorzugsweise 10 Millimeter, insbesondere 2 Millimeter.

Der Bearbeitungsbereich 2 weist im Querschnitt eine Bearbeitungsprofillinie 3 auf. Die Bearbeitungsprofillinie 3 umfasst einen ersten Bearbeitungskreisbogen 4a und einen zweiten Bearbeitungskreisbogen 4b.

Der erste Bearbeitungskreisbogen 4a erstreckt sich um einen ersten Bearbeitungsmittelpunkt M4a und der zweite Bearbeitungskreisbogen 4b erstreckt sich um einen zweiten Bearbeitungsmittelpunkt M4b. Die Bearbeitungsmittelpunkte M4a, M4b sind auf einer Parallelen P zur Rotationsachse R versetzt zueinander, zu der Mittelachse L und zu dem Zentrum Z angeordnet. Die Radien R4a und R4b der beiden Bearbeitungskreisbögen 4a, 4b sind gleich groß, sodass die Bearbeitungsbögen 4a, 4b zueinander symmetrisch verlaufen, wobei die Mittelachse L hierfür eine Symmetrieachse bildet. Aufgrund dieser Ausgestaltung und Anordnung der Bearbeitungskreisbögen 4a, 4b schneiden sich die beiden in einer Spitze 5, die auf der Mittelachse L liegt.

Wie in Figur 3b in einer Querschnittsansicht des Bearbeitungsbereichs gezeigt, kann die Spitze 5 abgetragen und/oder abgeflacht sein, sodass die Bearbeitungsprofillinie 3 im Querschnitt des Walzkörpers 1 einen Linienabschnitt 6 aufweist. Auf diese Weise kann durch den Linienabschnitt 6 ein Freibereich 7 erzeugt werden, welcher den Bearbeitungsbereich 2 unterbricht und/oder unterteilt. Dies bedeutet, dass der Freibereich 7 nicht zur Bearbeitung des Werkstücks eingesetzt wird, insbesondere ist der Freibereich 7 bei und/oder während der walzenden Bearbeitung des Werkstücks kontaktlos zu diesem angeordnet. Dies gewährleistet insbesondere die Einbringung der gewünschten Konturen in das Werkstück.

Der Linienabschnitt 6 ist als eine Strecke ausgebildet, die sich zwischen dem ersten Bearbeitungskreisbogen 4a und dem zweiten Bearbeitungskreisbogen 4b erstreckt und beide Bearbeitungskreisbögen 4a, 4b miteinander verbindet. Insbesondere mündet der erste Bearbeitungskreisbogen 4a in einem ersten Ende E1 des Linienabschnitts 6 und der zweite Bearbeitungskreisbogen 4b in einem zweiten Ende E2 des Linienabschnitts 6. Der Linienabschnitt 6 verläuft als die Strecke parallel zu der Rotationsachse R (Fig.3a). In einem alternativen Ausführungsbeispiel kann der Linienabschnitt 6 auch gekrümmt und/oder gebogen sein.

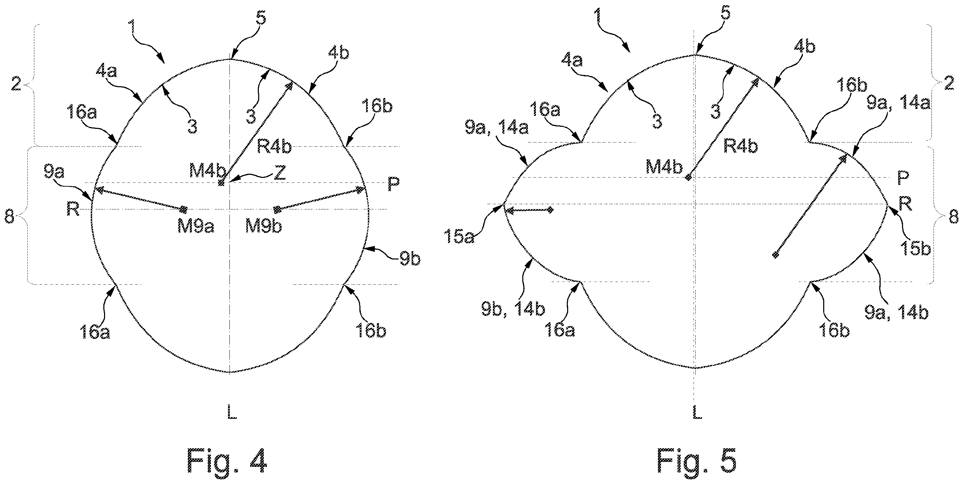

Wie in den Figuren 4 und 5 in einer Querschnittsansicht des Walzkörpers 1 verdeutlicht, weist der Walzkörper 1 einen Haltebereich 8 auf. In dem Haltebereich 8 kann der Walzkörper 1 an dem Walzwerkzeug 10 gehalten werden, so wie es in den Figuren 6a, 6b und 7 gezeigt ist.

Der Haltebereich 8 weist eine erste im Querschnitt des Walzkörpers 1 gebildete Halteprofillinie 9a und eine zweite im Querschnitt des Walzkörpers 1 gebildete Halteprofillinie 9b auf. Die Halteprofillinien 9a, 9b sind zueinander symmetrisch, wobei die Mittelachse L hierfür die Symmetrieachse bildet. Die beiden Halteprofillinien 9a, 9b münden in zwei Mündungsbereichen 16a, 16b, die als Radien ausgebildet sind.

Gemäß der Figur 4 bildet die erste Halteprofillinie 9a einen ersten Haltekreisbogen aus, der sich um einen auf der Rotationsachse R liegenden ersten Haltemittelpunkt M9b erstreckt. Die zweite Halteprofillinie 9b bildet einen zweiten Haltekreisbogen aus, der sich um einen auf der Rotationsachse R liegenden zweiten Haltemittelpunkt M9b erstreckt.

Wie in Figur 5 gezeigt kann jede der beiden Halteprofillinien 9a, 9b eine erste ovale Kurve und eine zweite ovale Kurve 14a, 14b umfassen, die sich in weiteren Spitzen 15a, 15b schneiden. Die weiteren Spitzen 15a, 15b sind auf der Rotationsachse R angeordnet. In einem alternativen nicht gezeigten Ausführungsbeispiel kann jede der beiden Halteprofillinien 9a, 9b anstatt der ovalen Kurven 14a, 14b zwei Haltekreisbögen aufweisen, deren Mittelpunkte versetzt zueinander und versetzt zu der Rotationsachse R angeordnet sind.

In den Figuren 6a und 6b ist ein erster Werkzeugkopf 12 der Werkzeugköpfe 12, 13 des Walzwerkzeugs 10 aus Figur 1 oder 2 gezeigt. Der Werkzeugkopf 12 weist eine Aufnahme 17 auf, die einen Käfig für den Walzkörper 1 bildet.

Gemäß der Figur 6a ist der Walzkörper 1 aus der Figur 4 zumindest teilweise in der Aufnahme 17 aufgenommen. Gemäß der Figur 6b ist der Walzkörper 1 aus der Figur 5 in der Aufnahme 17 aufgenommen. Der Walzkörper 1 ist im Haltebereich 8 in der Aufnahme 17 gehalten.

Die Aufnahme 17 bildet eine Negativform für die Gestalt und/oder Kontur des darin anzuordnenden Walzkörpers 1. Die jeweiligen Walzkörper 1 sind in der Aufnahme 17 rotierbar gelagert. Hierfür ist die Aufnahme 17 etwas voluminöser als der Walzkörper 1 ausgebildet.

Das Walzwerkzeug 10 (siehe Fig. 1, 2) weist einen Zuleitungskanal 18 auf, der sich durch den Werkzeugkopf 12, 13 erstreckt und in der Aufnahme 17 mündet. Dem Walzwerkzeug 10 kann eine nicht gezeigte Druckquelle und Flüssigkeitsquelle zugeordnet sein, mittels der eine unter Druck stehende Flüssigkeit durch den Zuleitungskanal 18 in die Aufnahme 17 einleitbar ist. Dadurch ist der Walzkörper 1 in der Aufnahme 17 hydrostatisch mit Kraft beaufschlagbar und um die Rotationsachse R rotierbar. In dem Werkzeugkopf 12 ist ein Entlastungskanal 19 vorgesehen, aus dem überschüssige Flüssigkeit aus der Aufnahme 17 wieder austreten kann.

Wie in Figur 7 gezeigt, können zur Vorpositionierung des Walzkörpers 1 in dem Werkzeugkopf 12 zwei Zentriereinrichtungen 20a, 20b vorgesehen sein. Die beiden Zentriereinrichtungen 20a, 20b ragen in die Aufnahme 17 hinein und sind auf gleicher Höhe gegenüberliegend zueinander angeordnet. Sie liegen auf der Rotationsachse R und greifen im Haltebereich 8 an den Halteprofillinien 9a, 9b des Walzkörpers 1 an.

### Bezugszeichenliste

- 1: Walzkörper
- 2: Bearbeitungsbereich
- 3: Bearbeitungsprofillinie
- 4a,b: Bearbeitungskreisbögen
- 5: Spitze
- 6: Linienabschnitt
- 7: Freibereich
- 8: Haltebereich
- 9a, b: Haltekreisbögen
- 10: Walzwerkzeug
- 11: Grundkörper
- 12: erster Werkzeugkopf
- 13: zweiter Werkzeugkopf
- 14a,b: ovale Kurven
- 15a,b: weitere Spitzen
- 16a,b: Mündungsbereiche
- 17: Aufnahme
- 18: Zuleitungskanal
- 19: Entlastungskanal
- 20a, b: Zentriereinrichtungen

- L: Mittelachse
- M4a: Mittelpunkt des ersten Bearbeitungskreisbogens
- M4b: Mittelpunkt des zweiten Bearbeitungskreisbogens
- P: Parallele
- R4a: Radius des ersten Bearbeitungskreisbogens
- R4b: Radius des zweiten Bearbeitungskreisbogens
- Z: Zentrum

## Patentansprüche

1. Walzkörper (1) für ein hydrostatisches Walzwerkzeug (10),
wobei der Walzkörper (1) um eine Rotationsachse (R) rotierbar ist, die durch ein Zentrum (Z) des Walzkörpers (1) verläuft,
wobei der Walzkörper (1) eine sich senkrecht zu der Rotationsachse (R) erstreckende Mittelachse (L) aufweist, die durch das Zentrum (Z) des Walzkörpers (1) verläuft,
wobei der Walzkörper (1) zur wälzenden Bearbeitung des Werkstücks einen Bearbeitungsbereich (2) mit einer im Querschnitt des Walzkörpers (1) gebildeten Bearbeitungsprofillinie (3) aufweist,
wobei die Bearbeitungsprofillinie (3) einen ersten Bearbeitungskreisbogen (4a) und einen zweiten Bearbeitungskreisbogen (4b) umfasst, wobei sich der erste Bearbeitungskreisbogen (4a) um einen ersten Bearbeitungsmittelpunkt (M4a) erstreckt und wobei sich der zweite Bearbeitungskreisbogen (4b) um einen zweiten Bearbeitungsmittelpunkt (M4b) erstreckt,
**dadurch gekennzeichnet, dass**
die beiden Bearbeitungsmittelpunkte (M4a, M4b) zueinander und zu dem Zentrum (Z) des Walzkörpers (1) versetzt angeordnet sind.

2. Walzkörper (1) nach Anspruch 1, **dadurch gekennzeichnet, dass** die beiden Bearbeitungsmittelpunkte (M4a, M4b) in dem Querschnitt des Walzkörpers (1) auf einer Parallelen (P) zu der Rotationsachse (R) liegen.

3. Walzkörper (1) nach Anspruch 1 oder 2, **dadurch gekennzeichnet, dass** die Mittelachse (L) eine Symmetrieachse für die beiden Bearbeitungskreisbögen (4a, 4b) bildet.

4. Walzkörper (1) nach einem der vorhergehenden Ansprüche, **dadurch gekennzeichnet, dass** sich der erste Bearbeitungskreisbogen (4a) und der zweite Bearbeitungskreisbogen (4b) in dem Querschnitt des Walzkörpers (1) in einem Schnittpunkt schneiden und eine Spitze (5) ausbilden.

5. Walzkörper (1) nach einem der vorhergehenden Ansprüche, **dadurch gekennzeichnet, dass** die Bearbeitungsprofillinie (3) im Querschnitt des Walzkörpers einen Linienabschnitt (6) umfasst, wobei der erste Bearbeitungskreisbogen (4a) in einem ersten Ende (E1) des Linienabschnitts (6) mündet und wobei der zweite Bearbeitungskreisbogen (4b) in einem zweiten Ende (E2) des Linienabschnitts (6) mündet.

6. Walzkörper (1) nach einem der vorhergehenden Ansprüche, **dadurch gekennzeichnet, dass** der Walzkörper (1) einen Haltebereich (8) aufweist, in dem der Walzkörper an dem Walzwerkzeug (10) gehalten ist, wobei der Haltebereich (8) eine erste im Querschnitt des Walzkörpers (1) gebildete erste Halteprofillinie (9a) und eine zweite im Querschnitt des Walzkörpers (1) gebildete zweite Halteprofillinie (9b) aufweist, wobei die erste Halteprofillinie (9a) einen ersten Haltekreisbogen ausbildet, der sich um einen auf der Rotationsachse (R) liegenden ersten Haltemittelpunkt (M9a) erstreckt und wobei die zweite Halteprofillinie (9b) einen zweiten Haltekreisbogen ausbildet, der sich um einen auf der Rotationsachse (R) liegenden zweiten Haltemittelpunkt (M9b) erstreckt.

7. Walzkörper (1) nach Anspruch 6, **dadurch gekennzeichnet, dass** jede Halteprofillinie (9a, 9b) zwei Haltekreisbögen oder zwei ovale Kurven (14a, 14b) umfasst, wobei die Haltemittelpunkte der zwei Haltekreisbögen versetzt zueinander und versetzt zu der Rotationsachse (R) angeordnet sind.

8. Hydrostatisches Walzwerkzeug (10) mit dem Walzkörper (1) nach einem der vorhergehenden Ansprüche, **dadurch gekennzeichnet, dass** der Walzkörper (1) zur walzenden Bearbeitung des Werkstücks an dem Walzwerkzeug (10) angeordnet ist.

9. Hydrostatisches Walzwerkzeug (10) nach Anspruch 8, **dadurch gekennzeichnet, dass** das Walzwerkzeug (10) mindestens einen Werkzeugkopf (12, 13) mit einer Aufnahme (17) umfasst, in der der Walzkörper (1) zumindest teilweise aufgenommen ist.

10. Hydrostatisches Walzwerkzeug (10) nach Anspruch 8 oder 9, **dadurch gekennzeichnet, dass** das Walzwerkzeug (10) einen langgestreckten Grundkörper (11) und mehrere Werkzeugköpfe (12, 13) umfasst, wobei die Werkzeugköpfe (12, 13) in einer Umfangsrichtung des Grundkörpers (11) und/oder axial versetzt zueinander angeordnet sind, sodass sich die Passivkräfte gegenseitig aufheben.

## Claims

1. A roller body (1) for a hydrostatic rolling tool (10),
wherein the roller body (1) is rotatable about an axis of rotation (R), which runs through a centre (Z) of the roller body (1),
wherein the roller body (1) has a central axis (L) extending perpendicular to the axis of rotation (R) and running through the centre (Z) of the roller body (1),
wherein the roller body (1) has a machining region (2) with a machining profile line (3) formed in the cross-section of the roller body (1) for rolling machining of the workpiece,
wherein the machining profile line (3) comprises a first machining arc (4a) and a second machining arc (4b), wherein the first machining arc (4a) extends around a first machining centre point (M4a) and the second machining arc (4b) extends around a second machining centre point (M4b),
**characterised in that**
the two machining centre points (M4a, M4b) are arranged offset relative to one another and relative to the centre (Z) of the roller body (1).

2. The roller body (1) according to claim 1, **characterised in that** the two machining centre points (M4a, M4b) in the cross-section of the roller body (1) lie on a parallel (P) to the axis of rotation (R).

3. The roller body (1) according to claim 1 or 2, **characterised in that** the central axis (L) forms an axis of symmetry for the two machining arcs (4a, 4b).

4. The roller body (1) according to any one of the preceding claims, **characterised in that** the first machining arc (4a) and the second machining arc (4b) intersect in the cross section of the roller body (1) and form a tip (5).

5. The roller body (1) according to any one of the preceding claims, **characterised in that** the machining profile line (3) in the cross-section of the roller body comprises a line section (6), wherein the first machining arc (4a) opens into a first end (E1) of the line section (6) and wherein the second machining arc (4b) opens into a second end (E2) of the line segment (6).

6. The roller body (1) according to any one of the preceding claims, **characterised in that** the roller body (1) has a retaining area (8) in which the roller body is held on the rolling tool (10), wherein the retaining area (8) has a first cross-section of the first retaining profile line (9a) formed on the roller body (1) and a second retaining profile line (9b) formed in the cross-section of the roller body (1), wherein the first retaining profile line (9a) forms a first retaining arc extending around a first retaining centre point (M9a) lying on the axis of rotation (R) and wherein the second retaining profile line (9b) forms a second retaining arc extending around a second retaining centre point (M9b) lying on the axis of rotation (R).

7. The roller body (1) according to claim 6, **characterised in that** each retaining profile line (9a, 9b) comprises two retaining arcs or two oval curves (14a, 14b), wherein the retaining centre points of the two retaining arcs are arranged offset from one another and offset from the axis of rotation (R).

8. A hydrostatic rolling tool (10) with the roller body (1) according to any one of the preceding claims, **characterised in that** the roller body (1) is arranged on the rolling tool (10) for rolling machining of the workpiece.

9. The hydrostatic rolling tool (10) according to claim 8, **characterised in that** the rolling tool (10) comprises at least one tool head (12, 13) with a receptacle (17) in which the roller body (1) is at least partially accommodated.

10. The hydrostatic rolling tool (10) according to claim 8 or 9, **characterised in that** the rolling tool (10) comprises an elongate base body (11) and a plurality of tool heads (12, 13), wherein the tool heads (12, 13) extend in a circumferential direction of the base body (11) and/or are arranged axially offset from one another, so that the passive forces cancel each other out.

## Revendications

1. Élément de laminage (1) pour un outil de laminage (10) hydrostatique,
dans lequel l'élément de laminage (1) peut tourner autour d'un axe de rotation (R), lequel traverse un centre (Z) de l'élément de laminage (1),
dans lequel l'élément de laminage (1) comporte un axe central (L) s'étendant perpendiculairement à l'axe de rotation (R) et traversant le centre (Z) de l'élément de laminage (1),
dans lequel l'élément de laminage (1), pour l'usinage par laminage de la pièce, comporte une zone d'usinage (2) comportant une ligne de profil d'usinage (3) formée dans la section transversale de l'élément de laminage (1),
dans lequel la ligne de profil d'usinage (3) comprend un premier arc de cercle d'usinage (4a) et un second arc de cercle d'usinage (4b), dans lequel le premier arc de cercle d'usinage (4a) s'étend autour d'un premier point central d'usinage (M4a) et le second arc de cercle d'usinage (4b) s'étend autour d'un second point central d'usinage (M4b),
**caractérisé en ce que**
les deux points centraux d'usinage (M4a, M4b) sont disposés décalés l'un par rapport à l'autre et par rapport au centre (Z) de l'élément de laminage (1).

2. Élément de laminage (1) selon la revendication 1, **caractérisé en ce que** les deux points centraux d'usinage (M4a, M4b) dans la section transversale de l'élément de laminage (1) sont situés sur une parallèle (P) à l'axe de rotation (R).

3. Élément de laminage (1) selon la revendication 1 ou 2, **caractérisé en ce que** l'axe central (L) forme un axe de symétrie pour les deux arcs de cercle d'usinage (4a, 4b).

4. Élément de laminage (1) selon l'une quelconque des revendications précédentes, **caractérisé en ce que** le premier arc de cercle d'usinage (4a) et le second arc de cercle d'usinage (4b) se coupent dans la section transversale de l'élément de laminage (1) à une intersection et forment une pointe (5).

5. Élément de laminage (1) selon l'une quelconque des revendications précédentes, **caractérisé en ce que** la ligne de profil d'usinage (3) dans la section transversale de l'élément de laminage comprend une section de ligne (6), dans lequel le premier arc de cercle d'usinage (4a) débouche dans une première extrémité (E1) de la section de ligne (6) et le second arc de cercle d'usinage (4b) débouche dans une seconde extrémité (E2) de la section de ligne (6).

6. Élément de laminage (1) selon l'une quelconque des revendications précédentes, **caractérisé en ce que** l'élément de laminage (1) comporte une zone de maintien (8) dans laquelle l'élément de laminage est maintenu sur l'outil de laminage (10), dans lequel la zone de maintien (8) comporte une première, première ligne de profil de maintien (9a) formée dans la section transversale de l'élément de laminage (1) et une seconde, seconde ligne de profil de maintien (9b) formée dans la section transversale de l'élément de laminage (1), dans lequel la première ligne de profil de maintien (9a) forme un premier arc de cercle de maintien, lequel s'étend autour d'un premier point central de maintien (M9a) situé sur l'axe de rotation (R) et dans lequel la seconde ligne de profil de maintien (9b) forme un second arc de cercle de maintien, lequel s'étend autour d'un second point central de maintien (M9b) situé sur l'axe de rotation (R).

7. Élément de laminage (1) selon la revendication 6, **caractérisé en ce que** chaque ligne de profil de maintien (9a, 9b) comprend deux arcs de cercle de maintien ou deux courbes (14a, 14b) ovales, dans lequel les points centraux de maintien des deux arcs de cercle de maintien sont décalés l'un de l'autre et décalés par rapport à l'axe de rotation (R).

8. Outil de laminage (10) hydrostatique comportant l'élément de laminage (1) selon l'une quelconque des revendications précédentes, **caractérisé en ce que** l'élément de laminage (1), pour l'usinage par laminage de la pièce, est disposé sur l'outil de laminage (10).

9. Outil de laminage (10) hydrostatique selon la revendication 8, **caractérisé en ce que** l'outil de laminage (10) comprend au moins une tête d'outil (12, 13) comportant un logement (17) dans lequel l'élément de laminage (1) est au moins partiellement logé.

10. Outil de laminage (10) hydrostatique selon la revendication 8 ou 9, **caractérisé en ce que** l'outil de laminage (10) comprend un corps de base (11) allongé et une pluralité de têtes d'outils (12, 13), dans lequel les têtes d'outils (12, 13) sont disposées dans une direction circonférentielle du corps de base (11) et/ou sont axialement décalés l'une par rapport à l'autre, de telle sorte que les forces passives se compensent entre elles.
